# EUROPÄISCHE PATENTANMELDUNG

(11) **EP 3 828 798 A1**
(43) Veröffentlichungstag der Anmeldung: **02.06.2021**
(21) Anmeldenummer: 19212537.5
(22) Anmeldetag: 29.11.2019
(51) Int. Cl.: G06Q 20/06, H04L 9/32

(54) **VORRICHTUNG UND VERFAHREN ZUM BILDEN VON DATENBLÖCKEN**

(71) Anmelder: Siemens Aktiengesellschaft, 80333 München (DE)
(72) Erfinder: Falk, Rainer, 85586 Poing (DE)

(57) **Zusammenfassung**

Die Erfindung ist vorteilhaft für wenig intensiv genutzten Blockchains (z. B. Verwaltung von Konfigurationseinstellungen) um zu verhindern laufend leere oder nur wenig gefüllte Datenblöcke zu bilden.

## Beschreibung

Die Aufgabe der Erfindung ist es, eine Alternative zum Stand der Technik zu bilden.

Nachfolgend werden Aspekte der Erfindung erläutert.

Gemäß einem ersten Aspekt betrifft die Erfindung eine Vorrichtung zum Bilden von Datenblöcken für eine Netzwerkapplikation aufweisend:
- eine Kommunikationsschnittstelle, wobei
   ∘ die Kommunikationsschnittstelle dazu eingerichtet ist, unvalidierte Transaktionen von einem oder mehreren Sendern zu empfangen,
   ∘ die unvalidierten Transaktionen Daten umfassen;
- ein Prüfmodul, wobei
   ∘ das Prüfmodul dazu eingerichtet ist ein Datenblockbildungsprüfergebnis für die unvalidierten Transaktionen anhand der Daten zu ermitteln;
- ein Datenblockbildungsmodul, wobei
   ∘ das Datenblockbildungsmodul dazu eingerichtet ist, abhängig vom Datenblockbildungsprüfergebnis einen Datenblock für eine Netzwerkapplikation zu bilden und/oder in einer Netzwerkapplikation zu speichern,
   ∘ beispielsweise das Datenblockbildungsmodul dazu eingerichtet ist, die unvalidierten Transaktionen als validierte Transaktionen im Datenblock zu speichern.

In einer Variante ist das Datenblockbildungsmodul z. B. dazu eingerichtet, abhängig vom Datenblockbildungsprüfergebnis einen Zeitpunkt zum Bilden des Datenblocks für eine Netzwerk-applikation zu ermitteln.

Alternativ kann beispielsweise das Datenblockbildungsmodul dazu eingerichtet sein, unvalidierte Transaktionen als validierte Transaktion im Datenblock zu speichern, wobei bei einer Entscheidung darüber, ob eine entsprechende Transaktion gespeichert wird, abhängig vom einem Zulässigkeitsprüfergebnis der unvalidierten Transaktionen und/oder vom Datenblockbildungsprüfergebnis erfolgt.

Beispielsweise können die Daten, die z. B. als Datensatz realisiert sind, Steuerbefehle umfassen, um beispielsweise eine Steuertransaktion zu realisieren, die in einer Netzwerkapplikation gespeichert wird und/oder von einer Komponente der Infrastruktur der Netzwerkkomponente ausgeführt wird.

Die Vorrichtung kann beispielsweise mittels einer Komponente (z. B. einem Knoten oder Gerät) einer Netzwerk-Applikation (oder auch als Netzwerkapplikation bezeichnet) und/oder einem verteilten Datenbanksystem und/oder einer Blockkette oder einer Kombination der genannten Möglichkeiten realisiert sein. Die Vorrichtung kann beispielsweise auch eine Netzwerk-Applikation oder ein verteiltes Datenbanksystem oder eine Blockkette sein oder als solche realisiert sein. Beispielsweise können Komponenten (z. B. ein Knoten) der Infrastruktur der Netzwerkapplikation (z. B. eine Blockkette) die Vorrichtung umfassen.

Die Technologie von Blockketten (engl. Blockchains) bzw. "Distributed Ledgers" ist aktuell eine intensiv diskutierte Technologie, die insbesondere als verteiltes Datenbanksystem oder als Netzwerk-Applikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, IoT-Geräte Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens, mehrere Verfahrensschritte oder alle Verfahrensschritte ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) oder eine Tensorverarbeitungseinheit TPU (Tensor Processing Unit) oder einen Netzwerkprozessor NPU (Network Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte, eine Speicherkarte, ein Flash-Speichermodul, ein Batterie-gepuffertes SRAM-Speichermodul oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen des entsprechenden Moduls ausführt oder um das erfindungsgemäße Verfahren oder einen Schritt des erfindungsgemäßen Verfahrens zu implementieren oder zu realisieren. Es kann beispielsweise ein Prozessor derart ausgebildet sein, dass dieser die Funktionen von mehreren Modulen realisiert.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerk-Applikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerk-Applikation) sein, eine Transaktionsprüfsumme eines Datenblocks mit den entsprechenden Daten (des verteilten Datenbanksystems oder der Netzwerk-Applikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank oder einer anderen Netzwerk-Applikation, welche die Daten umfasst) umfassen. Die entsprechenden Daten könnten dann beispielsweise auch in einer weiteren Transaktion eines weiteren Datenblocks des verteilten Datenbanksystems oder der Netzwerk-Applikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems oder der Netzwerk-Applikation möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerk-Applikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems oder einer Netzwerk-Applikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerk-Applikation) verweisen bzw. diese referenzieren [1] [4] [5] .

Unter "Einfügen in das verteilte Datenbanksystem oder die Netzwerk-Applikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems oder einer Netzwerk-Applikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems oder der Netzwerk-Applikation verkettet [1] [4] [5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockchain as a Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerk-Applikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Beispielsweise kann auch eine entsprechende Transaktion einen Smart-Contract umfassen. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder eine Bestätigungstransaktion mit einer Bestätigungsnachricht und/oder eine Ausführungsbestätigungstransaktion mit einer Ausführungsbestätigungsnachricht verstanden werden. Eine Ausführungsbestätigungsnachricht kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Ausführungsbestätigungsnachricht beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Ausführungsbestätigungsnachricht kann beispielsweise auch in dem verteilten Datenbanksystem oder der Netzwerk-applikation gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen für die verbleibenden unausgeführten Steuerbefehle erfüllt, dann anhand der Ausführungsbestätigungsnachricht diese unausgeführten Steuerbefehle der entsprechenden Steuertransaktion ausführen. Entsprechend kann die Ausführungsbestätigungsnachricht beispielsweise den Grad der Ausführung bzw. eine Angabe über den ausgeführten Teil der Steuerbefehle umfassen. Alternativ oder zusätzlich kann eine Ausführungsbestätigungsnachricht die Steuerbefehle angeben, die für eine erfolgreiche Ausführung der Steuerbefehle einer entsprechenden Steuertransaktion noch ausgeführt werden müssen. Entsprechend kann beispielsweise eine Ausführungsbestätigungsnachricht einen Datensatz umfassen, der angibt welche der Steuerbefehle noch auszuführen sind bzw. der angibt welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems oder der Netzwerk-Applikation) oder die entsprechende Transaktion des verteilten Datenbanksystems oder der Netzwerk-Applikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem oder die Netzwerk-Applikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem oder die Netzwerk-Applikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems oder der Netzwerk-Applikation ausgeführt [4][5]. Dabei wird beispielsweise eine virtuelle Maschine durch die Infrastruktur des verteilten Datenbanksystems (oder der Netzwerk-Applikation) realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems oder der Netzwerk-Applikation (z. B. eine Blockkette) gespeichert, beispielsweise in einem Datenblock des verteilten Datenbanksystems (oder der Netzwerk-Applikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem oder durch die Netzwerk-Applikation verstanden werden, wobei beispielsweise die entsprechende Infrastruktur des verteilten Datenbanksystems oder der Netzwerk-Applikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt oder Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette oder einem distributed ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1] [4] [5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann. Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerk-Applikation kann es sich beispielsweise um ein öffentliches verteiltes Datenbanksystem oder eine ein öffentliche Netzwerk-Applikation (z. B. eine öffentliche Blockkette) oder ein geschlossenes (oder privates) verteiltes Datenbanksystem oder eine geschlossene Netzwerk-Applikation (z. B. eine private Blockkette) handeln.

Handelt es sich beispielsweise um ein öffentliches verteiltes Datenbanksystem oder eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerk-Applikation beitreten zu können bzw. von diesem akzeptiert zu werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems oder einer Netzwerk-Applikation (z. B. eine Blockkette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1] [4] [5]. Bei einem Datenblock kann es sich beispielsweise auch nur um einen bestimmten Speicherbereich oder Adressbereich der Gesamtdaten handeln, die in dem verteilten Datenbanksystem oder der Netzwerk-Applikation gespeichert sind. Damit lassen sich beispielsweise blocklose (engl. blockless) verteilte Datenbanksysteme oder Netzwerk-Applikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems oder der Netzwerk-Applikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem oder der Netzwerk-Applikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Beispielsweise können zusätzlich zu einer Prüfsumme über die Transaktionen auch eine Prüfsumme über den "State", d.h. die Zustände der Smart-Contracts und/oder der Konten und/oder über die Rückgabewerte der Transaktionen (engl. Transaction Receipts) z. B. in die Transaktion und/oder den Datenblock eingefügt werden.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems oder der Netzwerk-Applikation" kann im Zusammenhang mit der Erfindung beispielsweise der Datenblock des verteilten Datenbanksystems oder der Netzwerk-Applikation verstanden werden, der insbesondere einem (bestimmten) Datenblock direkt vorhergeht. Alternativ können unter "vorhergehender Datenblöcke eines (bestimmten) Datenblockes des verteilten Datenbanksystems oder der Netzwerk-Applikation" insbesondere auch alle Datenblöcke des verteilten Datenbanksystems oder der Netzwerk-Applikation verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems der der Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem oder der Netzwerk-Applikation (z. B. eine Blockkette) durchführen [1][4][5]. Solche Knoten können beispielsweise Transaktionen eines verteilten Datenbanksystems oder einer Netzwerk-Applikation bzw. deren Datenblöcke ausführen oder neue Datenblöcke mit neuen Transaktionen in das verteilte Datenbanksystem oder die Netzwerk-Applikation mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem oder der Netzwerk-Applikation, eine Knotenprüfsumme (z. B. eine digitale Signatur oder ein Zertifikat) in dem neuen Datenblock speichern. Beider Knotenprüfsumme kann es sich dabei beispielsweise um eine von einem entsprechenden Knoten signierte Prüfsumme z. B. eines Datenblocks oder einer Transaktion handeln. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems oder der Netzwerk-Applikation sind. Dabei können die Geräte beispielsweise Feldgeräte sein oder Geräte im Internet der Dinge sein, die insbesondere auch ein Knoten des verteilten Datenbanksystems oder der Netzwerk-Applikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise über Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakels löscht). Das Sicherheitsmodul kann dabei beispielsweise kryptographische Schlüssel umfassen, die z. B. für die Signatur der Transaktion und/oder für die Berechnung der Prüfsummen (z. B. Transaktionsprüfsummen oder Knotenprüfsummen) notwendig sind. Ein Blockketten-Orakel kann beispielsweise eine Information der physikalischen Welt über einen Sensor erfassen und als Datensatz an eine Netzwerkapplikation übermitteln. Weiterhin kann ein Blockketten-Orakel einen Datensatz aus einer Datenbank auslesen und an eine Netzwerkapplikation übermitteln.

Unter einem "Rechner" oder einem "Gerät" kann im Zusammenhang mit der Erfindung beispielsweise ein Computer(system), ein Client, ein Smart-Phone, ein Server, die jeweils außerhalb der Blockkette angeordnet sind bzw. kein Teilnehmer des verteilten Datenbanksystems oder der Netzwerk-Applikation (z. B. der Blockkette) sind (also keine Operationen mit dem verteilten Datenbanksystem oder der Netzwerk-Applikation durchführen oder diese nur abfragen, ohne jedoch Transaktionen durchzuführen, Datenblöcke einzufügen oder Proof-of-Work-Nachweise zu berechnen), verstanden werden. Alternativ kann insbesondere auch unter einem Rechner ein Knoten des verteilten Datenbanksystems oder der Netzwerk-Applikation verstanden werden. Mit anderen Worten kann insbesondere unter einem Gerät ein Knoten des verteilten Datenbanksystems oder der Netzwerk-Applikation verstanden werden oder auch ein Gerät außerhalb der Blockkette bzw. des verteilten Datenbanksystems oder der Netzwerk-Applikation verstanden werden. Ein Gerät außerhalb des verteilten Datenbanksystems oder der Netzwerk-Applikation kann beispielsweise auf die Daten (z. B. Transaktionen oder Steuertransaktionen) des verteilten Datenbanksystems oder der Netzwerk-Applikation zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems oder der Netzwerk-Applikation) durch einen Knoten realisiert, kann dies z. B. mittels eines Smart-Contracts erfolgen, der insbesondere in einer Transaktion des verteilten Datenbanksystems oder der Netzwerk-Applikation gespeichert ist. Ein Rechner oder ein Gerät kann beispielsweise auch ein Teil der Infrastruktur sein, die z. B. die Netzwerk-Applikation oder das verteilte Datenbanksystem ausführt, realisiert oder umfasst.

Unter "Steuerbefehle" oder "Steuertransaktionen" können im Zusammenhang mit der Erfindung beispielsweise ein Smart-Contract [4][5] oder ausführbarer Programmcode verstanden werden, der insbesondere durch die Netzwerkapplikation oder das verteilte Datenbanksystem oder durch entsprechende Geräte ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge. Mittels der Steuerbefehle werden insbesondere eine Fertigungsanlage mit den zugehörigen Fertigungsmaschinen (z. B. Geräte) gesteuert, die Geräte eines Automatisierungsnetzes gesteuert oder die Geräte eines Energieversorgungsnetzes gesteuert oder Geräte im Internet der Dinge gesteuert. Insbesondere sind in den Steuerbefehlen oder Steuertransaktionen (also auch in den Befehlsfolgen) die Fertigungsanweisungen oder Fertigungsschritte für ein Produkt und dessen Herstellung kodiert. Mit den Steuerbefehlen oder Steuertransaktionen werden beispielsweise Geräte gesteuert, indem beispielsweise ein Gerät die entsprechenden Steuerbefehle ausführt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Ausführungsbestätigungsnachrichten für ausgeführte Steuerbefehle durch die Vorrichtung oder durch die Netzwerkapplikation ausgewertet werden und entsprechende Steuerbefehle als Reaktion auf die Ausführungsbestätigungsnachrichten erzeugt werden. Für diese neuen Steuerbefehle werden dann beispielsweise wieder entsprechende Ausführungsanforderungen bestimmt oder abgerufen und diese werden dann beispielsweise wieder Steuertransaktionen zugeordnet, damit diese beispielsweise - wie in der Erfindung beschrieben - von den entsprechenden Geräten für die Ausführung der Steuerbefehle berücksichtigt werden. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem oder der Netzwerkapplikation ausgeführt werden sollen. Unter Steuerbefehlen können beispielsweise Befehlsfolgen oder Steuerbefehle verstanden werden mit denen mechanische und/oder elektrische und/oder elektromechanische und/oder elektronische Geräte gesteuert werden.

Bei weiteren Ausführungsformen der Vorrichtung wird zusätzlich zu den Daten ein vorgegebener Schwellwert zur Bildung des Datenblockbildungsprüfergebnisses berücksichtigt, wobei insbesondere das Datenblockbildungsprüfergebnis bei einem Einhalten des Schwellwertes angibt, dass der Datenblock mit den validierten Transaktionen gebildet wird. Unter Einhalten wird dabei insbesondere ein Erreichen oder ein Überschreiten des vorgegebenen Schwellwertes verstanden. Dies kann z. B. bedeuten, dass der Datenblock dann gebildet wird, wenn der Schwellwert überschritten wird.

Bei weiteren Ausführungsformen der Vorrichtung wird zusätzlich zu den Daten ein Ereignis zur Bildung des Datenblockbildungsprüfergebnisses berücksichtigt oder die Ermittlung des Datenblockbildungsprüfergebnisses durch ein Ereignis gesteuert, wobei insbesondere das Ereignis ein von der Vorrichtung empfangenes Steuersignal oder empfangener Steuerbefehl ist. Insbesondere kann das Ereignis den Schwellwert festlegen. Ein Ereignis kann dabei z. B. eine Steuerungsnachricht oder ein Steuerungsbefehl sein, der von der Vorrichtung empfangen wird, um diese z. B. zu konfigurieren.

Bei weiteren Ausführungsformen der Vorrichtung wird beim Ermitteln des Datenblockbildungsprüfergebnisses für die Daten eine zeitliche Dringlichkeit für die jeweiligen unvalidierten Transaktionen und/oder für die unvalidierten Transaktionen insgesamt ermittelt, wobei insbesondere die Dringlichkeit anhand des Schwellwertes ermittelt wird.

Bei weiteren Ausführungsformen der Vorrichtung gibt der Schwellwert eine Anzahl von empfangenen unvalidierten Transaktionen vor.

Bei weiteren Ausführungsformen der Vorrichtung umfasst der Datenblock einen Zeitstempel, der den Zeitpunkt des Bildens des Datenblocks angibt.

Bei weiteren Ausführungsformen der Vorrichtung stellt (oder ermittelt) die Netzwerkapplikation und/oder die Vorrichtung eine Blockinformation für den aktuellen und/oder zuletzt erzeugten Datenblock bereit.

Bei weiteren Ausführungsformen der Vorrichtung umfassen die unvalidierten Transaktionen Steuertransaktionen und/die Daten Steuerbefehle.

Bei weiteren Ausführungsformen der Vorrichtung ist die Vorrichtung ein Knoten oder mehrere Knoten einer Netzwerkapplikation.

Bei weiteren Ausführungsformen der Vorrichtung ist die Transaktion mittels einer Transaktionsprüfsumme geschützt und/oder der Datenblock ist mit einer Datenblockprüfsumme geschützt.

Bei weiteren Ausführungsformen der Vorrichtung ist die Netzwerkapplikation ein verteiltes Datenbanksystem, insbesondere eine Blockkette, wobei der Sender ein Knoten der Netzwerk-applikation ist. Alternativ oder zusätzlich ist insbesondere ein Knoten, der ein Sender ist, eine Blockketten-Wallet oder ein Blockketten-Orakel. Alternativ oder zusätzlich ist insbesondere die Vorrichtung ein Knoten der Netzwerkapplikation, wobei insbesondere ein Knoten, der eine Vorrichtung ist, ein Mining-Knoten ist.

Bei weiteren Ausführungsformen der Vorrichtung umfasst die Vorrichtung ein Validierungsmodul, wobei das Validierungsmodul dazu eingerichtet ist, ein Zulässigkeitsprüfergebnis über eine Zulässigkeit der entsprechenden unvalidierten Transaktionen zu ermitteln. Abhängig vom Zulässigkeitsprüfergebnis der entsprechenden unvalidierten Transaktionen, werden vorzugsweise die unvalidierten Transaktionen als die validierten Transaktionen im Datenblock gespeichert.

Gemäß einem weiteren Aspekt betrifft die Erfindung ein computerimplementiertes Verfahren zum Bilden von Datenblöcken für eine Netzwerkapplikation mit folgenden Verfahrensschritten:
- Empfangen unvalidierter Transaktionen von einem oder mehreren Sendern, wobei die unvalidierten Transaktionen Daten umfassen;
- Ermitteln eines Datenblockbildungsprüfergebnisses anhand der Daten für die unvalidierten Transaktionen;
- Ermitteln eines Zulässigkeitsprüfergebnisses über eine Zulässigkeit der entsprechenden unvalidierten Transaktionen;
- Bilden oder Speichern eines Datenblocks abhängig vom Datenblockbildungsprüfergebnis, wobei der Datenblock für eine Netzwerkapplikation gebildet wird und/oder in einer Netzwerkapplikation gespeichert wird;
- Speichern der unvalidierten Transaktionen als validierte Transaktion im Datenblock abhängig vom Zulässigkeitsprüfergebnis der entsprechenden unvalidierten Transaktionen.

Bei weiteren Ausführungsformen des Verfahrens umfasst das Verfahren weitere Verfahrensschritte oder Merkmale der Vorrichtung, um z. B. die funktionalen Merkmale der Vorrichtung oder der Ausführungsformen der Vorrichtung als Verfahren zu realisieren.

Gemäß einem weiteren Aspekt betrifft die Erfindung ein computerimplementiertes Verfahren zum Bilden von Datenblöcken für eine Netzwerkapplikation mit folgenden Verfahrensschritten:
- Empfangen unvalidierter Transaktionen von einem oder mehreren Sendern, wobei die unvalidierten Transaktionen Daten umfassen;
- Ermitteln eines Datenblockbildungsprüfergebnisses anhand der Daten für die unvalidierten Transaktionen;
- Bilden oder Speichern eines Datenblocks abhängig vom Datenblockbildungsprüfergebnis, wobei der Datenblock für eine Netzwerkapplikation gebildet wird und/oder in einer Netzwerkapplikation gespeichert wird;
- Speichern der unvalidierten Transaktionen als validierte Transaktion im Datenblock.

Bei weiteren Ausführungsformen des Verfahrens umfasst das Verfahren weitere Verfahrensschritte oder Merkmale der Vorrichtung, um z. B. die funktionalen Merkmale der Vorrichtung oder der Ausführungsformen der Vorrichtung als Verfahren zu realisieren.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die erfindungsgemäße Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Vorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

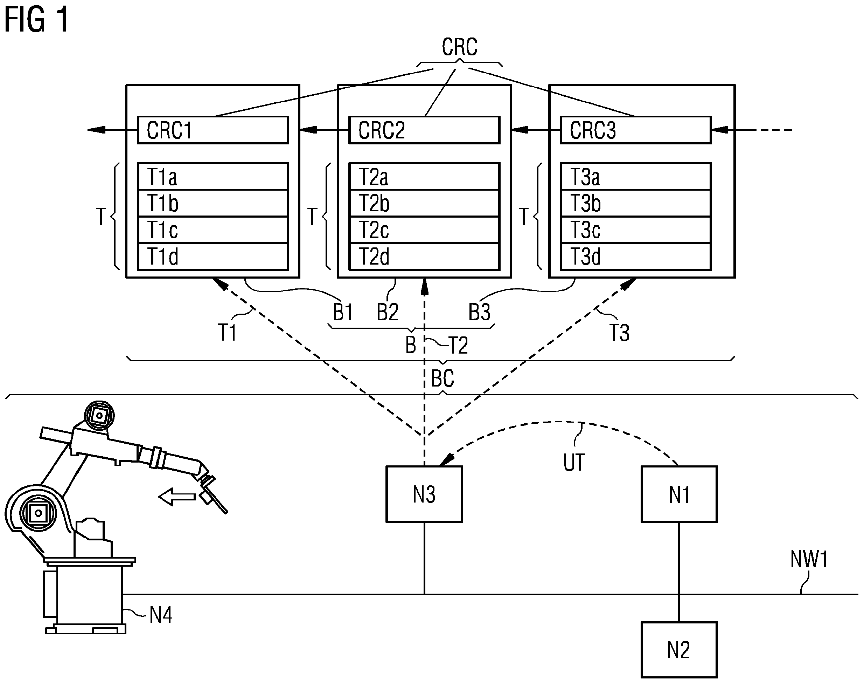

Fig. 1 zeigt ein cyberphysikalisches System, das eine Netzwerk-Applikation und deren Infrastruktur umfasst.

Das in Fig. 1 gezeigte System kann beispielsweise eine Netzwerk-Applikation in Form einer Blockkette BC oder eines verteilten Datenbanksystems umfassen, wobei das verteilte Datenbanksystem z. B. mittels einer Blockkette BC realisiert ist.

In Fig. 1 sind ein erster Knoten N1 (z. B. ein Mining Knoten einer Blockkette), ein zweiter Knoten N2 (z. B. ein Blockketten-Orakel mit z. B. einem Sensor), ein dritter Knoten N3 (z. B. eine erfindungsgemäße Vorrichtung) und ein vierter Knoten N4 (z. B. Fertigungsroboter).

Die Knoten N1 - N4 bilden beispielhaft einen Teil der Infrastruktur der Netzwerkapplikation, die z. B ein verteiltes Datenbanksystem (z. B. die Blockkette BC) ist.

Die Knoten sind dabei z. B. über ein erstes Kommunikationsnetzwerk NW1 (z. B. ein WAN, LAN oder das Internet) miteinander verbunden. Das verteilte Datenbanksystem kann zudem noch eine Vielzahl weiterer Knoten umfassen. Mit anderen Worten sind eine Vielzahl von Geräten (die Knoten N1 - N4) in Fig. 1 gezeigt, die mittels der Netzwerkapplikation in Form eines verteilten Datenbanksystems kommunikativ verbunden sind.

Die Vorrichtung (z. B. Knoten N3) umfasst eine Kommunikationsschnittstelle, ein Prüfmodul, ein Validierungsmodul und ein Datenblockbildungsmodul, die beispielsweise über einen Bus kommunikativ verbunden sind.

Die Kommunikationsschnittstelle ist dazu eingerichtet, eine unvalidierte Transaktion UT von einem oder mehreren Sendern (z. B. Knoten N1 und/oder N2) zu empfangen, wobei die unvalidierten Transaktionen UT Daten (z. B. Datensätze) umfassen. Beispielsweise können die Daten oder Datensätze Steuerbefehle zum Steuern des Knotens N4 umfassen. Eine solche Transaktion, die Steuerbefehle in ihren Daten umfasst, kann z. B. als Steuertransaktion bezeichnet werden.

Die Kommunikationsschnittstelle kann beispielsweise als Netzwerkschnittstelle oder als andere Schnittstelle (z. B. eine PCI- oder USB-Schnittstelle) ausgebildet sein, damit z. B. die Prüfvorrichtung einfach im dritten Knoten N3 installiert werden kann oder mit dem dritten Knoten N3 verbunden werden kann.

Das Prüfmodul ist dazu eingerichtet, ein Datenblockbildungsprüfergebnis für die unvalidierten Transaktionen UT anhand der Daten zu ermitteln. Zusätzlich kann beispielsweise ein Blockbildekriterium (z. B. ein Schwellwert) berücksichtigt werden. Dies ist vorzugsweise nicht der aus dem Stand der Technik bekannte Validierungsprozess für unvalidierte Transaktionen UT. Es wird beispielsweise bei der Prüfung der Daten durch das Prüfungsmodul zusätzlich ein vorgegebener Schwellwert als Blockbildekriterium zur Bildung des Datenblockbildungsprüfergebnisses berücksichtigt, wobei insbesondere das Datenblockbildungsprüfergebnis bei einem Einhalten des Schwellwertes angibt, dass der Datenblock gebildet wird, der die validierten Transaktionen speichern soll. Unter einem "Einhalten" wird dabei insbesondere ein Erreichen oder ein Überschreiten des vorgegebenen Schwellwertes verstanden.

Das Validierungsmodul ist dazu eingerichtet, ein Zulässigkeitsprüfergebnis über eine Zulässigkeit der entsprechenden unvalidierten Transaktionen UT zu ermitteln.

Das Datenblockbildungsmodul ist dazu eingerichtet, abhängig vom Datenblockbildungsprüfergebnis einen Datenblock für eine Netzwerkapplikation zu bilden und/oder in einer Netzwerk-applikation zu speichern, wobei das Datenblockbildungsmodul dazu eingerichtet ist, abhängig vom Zulässigkeitsprüfergebnis der entsprechenden unvalidierten Transaktionen UT, unvalidierte Transaktionen UT als validierte Transaktion T im Datenblock zu speichern.

Speichern in der Netzwerkapplikation bedeutet dabei beispielsweise, dass der entsprechende Datenblock in einer Datenstruktur gespeichert wird, der von der Infrastruktur der Netzwerkapplikation verwaltet wird.

Des Weiteren zeigt die Fig. 1 Blöcke B, beispielsweise einen ersten Block B1, einen zweiten Block B2 und einen dritten Block B3, der Blockkette BC, wobei hier insbesondere ein Ausschnitt der Blockkette BC exemplarisch gezeigt ist.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten VorgängerBlock gebildet wird. Somit umfasst der erste Block B1 eine erste Verkettungsprüfsumme CRC1 von seinem Vorgängerblock, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256, BLAKE2 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde. Ebenso ist es möglich, dass ein Block einen Proof-of-Possession-Nachweis oder einen anderen Berechtigungsnachweis aufweist.

Die Blockkette BC selbst wird durch eine Blockketten-Infrastruktur mit den mehreren Blockketten-Knoten (z. B. Knoten N1 - N8 und weiteren Knoten) realisiert. Bei den Knoten kann es sich beispielsweise um Blockkettenorakel oder vertrauenswürdige Knoten handeln.

Die Erfindung ist z. B. für Knoten einer Netzwerkapplikation wie z. B. Blockketten-Orakel oder Blockketten-Wallets geeignet.

Mit der Vorrichtung können z. B. Datenblöcke für eine Netzwerkapplikation (z. B. eine Blockkette) bzw. deren Infrastruktur bedarfsabhängig gebildet werden. Dadurch ergibt sich eine variable Blockrate.

Konventionelle Blockketten (z. B. Bitcoin, Ethereum) bilden einen neuen Datenblock (z. B. einen Block) derart, sodass sich ein relativ festes zeitliches Raster statistisch ergibt. Diese Eigenschaft ist aber eigentlich nur erforderlich, wenn ein Proof-of-Work zur Bildung eines Datenblocks erfolgt. Wird beispielsweise Proof-of-Stake oder Proof-of-Authority verwendet, ist ein solches starres zeitliches Raster nicht notwendig. Insbesondere ist dabei nachteilig, dass die Bildung eines neuen Datenblocks unnötig lange dauern kann, obwohl schon eine Vielzahl an unvalidierten Transaktionen UT bereitstehen.

Mit der Erfindung wird ein Datenblock ereignisgesteuert anhand des Datenblockbildungsprüfergebnisses gebildet. Hierzu kann ein beliebiges Ereignis dienen, z. B. ein Steuersignal oder der Empfang einer Blockbildungs-Anforderungsnachricht. Ein entsprechendes Ereignis kann beispielsweise zu einem ersten Zeitpunkt T1 erfolgen und/oder zu einem zweiten Zeitpunkt T2 erfolgen oder zu einem dritten Zeitpunkt T3 erfolgen. Die Zeitdifferenz zwischen den Zeitpunkten ist hierbei verschieben oder nicht fest vorgegeben. Beispielsweise wir der erste Datenblock B1 zum Zeitpunkt T1 gebildet, der zweite Datenblock B2 zum Zeitpunkt T2 und der dritte Datenblock B3 zum Zeitpunkt T3.

Vorzugsweise erfolgt jedoch eine Bewertung des Pools unvalidierter Transaktionen UT (diese können auch als unbestätigte Transaktionen bezeichnet werden), um davon abhängig zu bestimmen, ob bzw. wann ein neuer Block gebildet wird. Ein Pool ist dabei insbesondere ein Zwischenspeicher, der ein oder mehrere zwischengespeicherte unvalidierte Transaktionen UT umfasst.

Hierzu werden zunächst die empfangenen unvalidierten Transaktionen UT gesammelt und in dem Zwischenspeicher gespeichert. Für die entsprechenden unvalidierten Transaktionen wird z. B. eine zeitliche Dringlichkeit (einzeln je unvalidierter Transaktion, Gesamtbewertung der unvalidierten Transkationen) ermittelt und/oder eine Anzahl unvalidierter Transaktionen UT ermittelt.

Das Bilden eines Datenblocks zur Bestätigung der noch unbestätigten Transaktionen erfolgt z. B. erst dann, wenn es tatsächlich notwendig ist, d. h. wenn genügend viele (z. B. durch den Schwellwert vorgegebenen) kritische unvalidierte Transaktionen aufgelaufen sind. Die Kritikalität der unvalidierten Transaktionen UT kann z. B. anhand der Dringlichkeit ermittelt werden. Beispielsweise können die Daten hierzu Vorgaben umfassen, die angeben, wann spätestens eine entsprechende Transaktion als validierte Transaktion in einem Datenblock gespeichert sein soll. Diese Prüfungen werden vorzugsweise vom Prüfmodul vorgenommen und in dem Datenblockbildungsprüfergebnis gespeichert. Mit anderen Worten wird mittels des Datenblockbildungsprüfergebnisses dessen Werte gesteuert, wann ein neuer Datenblock zum Speichern von validierten Transaktionen gebildet wird. Dadurch kann ein unnötiges Bilden von nicht notwendigen Blöcken vermieden werden.

In einer Variante wird ein neuer Block nach Ablauf einer maximal zulässigen Zeitspanne auch dann gebildet, wenn das Blockbildekriterium (z. B. der Schwellwert) noch nicht erreicht sein sollte.

Dadurch kann erreicht werden, dass zumindest stündlich oder täglich zumindest ein neuer Block gebildet wird.

Ein Datenblock kann dabei ein oder mehrere Transaktionen umfassen z. B. zu Bezahlvorgängen oder zur Zuordnungsänderung des Besitzers eines Objekts. Ein Datenblock kann z. B. auch Transaktionen eines industriellen Steuerungssystems enthalten, die Sensormesswerte bzw. Steuerkommandos (Steuerbefehle) codieren.

Vorzugsweise werden die Datenblöcke dann gebildet, wenn es notwendig ist, d.h. wenn genügend viele bzw. hinreichend kritische unvalidierte Transaktionen zu bestätigen sind. Dadurch ergibt sich, dass die zeitlichen Abstände der einzelnen Datenblöcken schwanken bzw. verschieden voneinander sind, wobei sich die zeitlichen Abstände z. B. aus der Art der jeweils in einem Datenblöcke zu bestätigenden unvalidierten Transaktionen ergeben.

Ein Datenblock kann z. B. eine Zeitstempelangabe des Bildungszeitpunkts umfassen.

Ein Knoten (z. B. ein Knoten der Blockkette BC) kann weiterhin den aktuellen, letzten bestätigten Datenblock ermitteln. Dazu kann die Information über ein Peer-to-Peer-Netzwerk verteilt werden oder von einem Server oder Gerät abgefragt werden oder bereitgestellt werden.

Bei dem in Fig. 1 gezeigten System kann z. B. der Knoten N1 eine Blockchain-Wallet sein, die eine digital signierte unvalidierte Transaktion UT erzeugt, wobei die Wallet bzw. der Knoten N1 die unvalidierte Transaktion UT z. B. der Infrastruktur der Netzwerkapplikation übermittelt. Die Infrastruktur der Netzwerkapplikation umfasst dabei die Vorrichtung (z. B. als dritte Knoten N3), um die digital signierte unvalidierte Transaktion UT zu prüfen und/oder zu bestätigen. Alternativ kann der Knoten N1 auch ein Orakel (z. B. ein Bloccketten-Orakel) sein, das z. B. über Sensoren verfügt. Ein solcher Knoten kann z. B. Messwerte eines Automatisierungssystems oder einer Maschine (z. B. Knoten N4) in Form einer von ihm digital signierten Transaktion in die Netzwerkapplikation einstellen.

Ein Orakel kann jedoch z. B. auch andere Informationen, beispielsweise aus einer Datenbank oder von einem Web-Server, in die Blockchain einstellen.

Die Vorrichtung kann in einer Variante folgendes umfassen: Das Datenblockbildungsmodul (Block Builder): Generieren eines neuen Datenblocks für die Netzwerkapplikation (z. B. eine Blockkette).
Das Validierungsmodul (Transaction Verifier): Überprüfung eingestellter (noch unbestätigter) Transaktionen (abhg. vom Smart Contracts).
Zusätzlich ein Konsensusmodul (Mining): Zum Durchführen eines Konsensusverfahrens. Beispielsweise ein Lösen eines kryptographischen Puzzles zum Bilden eines Datenblocks beim Proof-of-Work-Verfahren. Es können jedoch auch andere Verfahren verwendet werden. Beispielsweise kann eine permissioned Blockkette verwendet werden, bei der nur bekannte, berechtigte Teilnehmerknoten auf die Blockchain-Infrastruktur zugreifen können. Das Konsensusmodul kann z. B. auch ein Verfahren sein, das einen Proof-of-Stake oder Proof-of-Authority implementiert.
Zusätzlich einen Zwischenspeicher (PuT, Pool of unconfirmed Transaktions): Knoten bilden (digital signierte) unvalidierte Transaktionen UT und stellen sie in den Pool von unvalidierten Transaktionen (PuT) ein. Dazu wird z. B. eine (unvalidierte) Transaktion an einen oder mehrere Blockchain-Knoten BCN übermittelt.

Die Prüfvorrichtung und/oder die Vorrichtung und/oder die Knoten und/oder die Infrastruktur der Netzwerkapplikation können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Erfindung ist vorteilhaft für wenig intensiv genutzten Blockchains (z. B. Verwaltung von Konfigurationseinstellungen) um zu verhindern, laufend leere oder nur wenig gefüllte Datenblöcke zu bilden.

Entsprechendes gilt, wenn eine Blockchain stark schwankend genutzt wird: Blöcke werden dann je nach Auslastung gebildet.

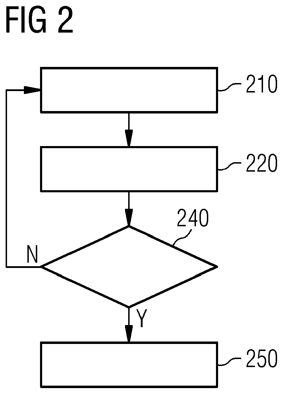

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein computerimplementiertes Verfahren zum Bilden von Datenblöcken für eine Netzwerkapplikation gezeigt.
- Ermitteln eines Zulässigkeitsprüfergebnisses über eine Zulässigkeit der entsprechenden unvalidierten Transaktionen;
- Bilden oder Speichern eines Datenblocks abhängig vom Datenblockbildungsprüfergebnis, wobei der Datenblock für eine Netzwerkapplikation gebildet wird und/oder in einer Netzwerkapplikation gespeichert wird;

Das Verfahren umfasst einen ersten Verfahrensschritt 210 zum Empfangen unvalidierter Transaktionen von einem oder mehreren Sendern, wobei die unvalidierten Transaktionen Daten umfassen.

Das Verfahren umfasst einen zweiten Verfahrensschritt 220 zum Ermitteln eines Datenblockbildungsprüfergebnisses anhand der Daten für die unvalidierten Transaktionen.

Das Verfahren umfasst einen optionalen dritten Verfahrensschritt zum Ermitteln eines Zulässigkeitsprüfergebnisses über eine Zulässigkeit der entsprechenden unvalidierten Transaktionen.

Das Verfahren umfasst einen vierten Verfahrensschritt 240 zum Bilden oder Speichern eines Datenblocks abhängig vom Datenblockbildungsprüfergebnis, wobei der Datenblock für eine Netzwerkapplikation gebildet wird und/oder in einer Netzwerk-applikation gespeichert wird. Ist beispielsweise ein vorgegebener Schwellwert an unvalidierten Transaktionen erreicht oder überschritten Y, wird über das Datenblockbildungsprüfergebnis das Erstellen des neuen Datenblocks gesteuert. Ist beispielsweise der vorgegebene Schwellwert für unvalidierte Transaktionen noch unterschritten N, so wird die Bildung eines neuen Datenblocks unterbunden, bis der Schwellwert erreicht oder überschritten ist. Hierbei wird dann z. B. so lange gewartet bis ausreichend viele unvalidierte Transaktionen empfangen wurden, um den Schwellwert zu erreichen oder zu überschreiten.

Das Verfahren umfasst einen fünften Verfahrensschritt 250 zum Speichern der unvalidierte Transaktionen als validierte Transaktion im Datenblock. Dies erfolgt beispielsweise abhängig vom Zulässigkeitsprüfergebnis der entsprechenden unvalidierten Transaktionen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018
[9] Joseph Poon, Thaddeus Dryja: The Bitcoin Lightning Network: Scalable Off-Chain Instant Payments. 14. Januar 2016, abgerufen am 30. Juni 2018 (PDF; 3 MB, englisch).

## Patentansprüche

1. Vorrichtung zum Bilden von Datenblöcken für eine Netzwerk-applikation aufweisend:
- eine Kommunikationsschnittstelle, wobei
o die Kommunikationsschnittstelle dazu eingerichtet ist unvalidierte Transaktionen von einem oder mehreren Sendern zu empfangen,
o die unvalidierten Transaktionen Daten umfassen;
- ein Prüfmodul, wobei
∘ das Prüfmodul dazu eingerichtet ist ein Datenblockbildungsprüfergebnis für die unvalidierten Transaktionen anhand der Daten zu ermitteln;
- ein Datenblockbildungsmodul, wobei
∘ das Datenblockbildungsmodul dazu eingerichtet ist, abhängig vom Datenblockbildungsprüfergebnis einen Datenblock für eine Netzwerkapplikation zu bilden und/oder in einer Netzwerkapplikation zu speichern,
∘ das Datenblockbildungsmodul dazu eingerichtet ist, die unvalidierte Transaktionen als validierte Transaktionen im Datenblock zu speichern.

2. Vorrichtung nach Anspruch 1, wobei
- zusätzlich zu den Daten ein vorgegebener Schwellwert zur Bildung des Datenblockbildungsprüfergebnisses berücksichtigt wird,
- insbesondere das Datenblockbildungsprüfergebnis bei einem Einhalten des Schwellwertes angibt, dass der Datenblock für die validierten Transaktionen gebildet wird.

3. Vorrichtung nach einem der vorhergehenden Ansprüche, wobei
- zusätzlich zu den Daten ein Ereignis zur Bildung des Datenblockbildungsprüfergebnisses berücksichtigt wird oder die Ermittlung des Datenblockbildungsprüfergebnisses durch ein Ereignis gesteuert wird,
- insbesondere das Ereignis ein von der Vorrichtung empfangenes Steuersignal oder empfangender Steuerbefehl ist,
- insbesondere das Ereignis den Schwellwert festlegt.

4. Vorrichtung nach einem der vorhergehenden Ansprüche, wobei
- beim Ermitteln des Datenblockbildungsprüfergebnisses für die Daten eine zeitliche Dringlichkeit für die jeweiligen unvalidierten Transaktionen und/oder für die unvalidierten Transaktionen insgesamt ermittelt wird,
- insbesondere die Dringlichkeit anhand des Schwellwertes ermittelt wird.

5. Vorrichtung nach einem der Ansprüche 2 - 4, wobei
- der Schwellwert eine Anzahl von empfangenen unvalidierten Transaktionen vorgibt.

6. Vorrichtung nach einem der vorhergehenden Ansprüche, wobei
- der Datenblock einen Zeitstempel umfasst, der den Zeitpunkt des Bildens des Datenblocks angibt.

7. Vorrichtung nach einem der vorhergehenden Ansprüche, wobei
- die Netzwerkapplikation und/oder die Vorrichtung eine Blockinformation für den aktuellen und/oder zuletzt erzeugten Datenblock bereitstellt und/oder ermittelt.

8. Vorrichtung nach einem der vorhergehenden Ansprüche, wobei
- die unvalidierten Transaktionen Steuertransaktionen sind und/die Daten Steuerbefehle umfassen.

9. Vorrichtung nach einem der vorhergehenden Ansprüche, wobei
- die Vorrichtung ein Knoten oder mehrere Knoten einer Netzwerkapplikation ist.

10. Vorrichtung nach einem der vorhergehenden Ansprüche, wobei
- die Transaktion mittels einer Transaktionsprüfsumme geschützt ist und/oder der Datenblock mit einer Datenblockprüfsumme geschützt ist.

11. Vorrichtung nach einem der vorhergehenden Ansprüche, wobei
- die Netzwerkapplikation ein verteiltes Datenbanksystem, insbesondere eine Blockkette, ist,
- der Sender ein Knoten der Netzwerkapplikation ist,
- insbesondere ein Knoten, der ein Sender ist, eine Blockketten-Wallet oder ein Blockketten-Orakel ist,
- insbesondere die Vorrichtung ein Knoten der Netzwerkapplikation ist,
- insbesondere ein Knoten, der eine Vorrichtung ist, ein Mining-Knoten ist.

12. Vorrichtung nach einem der vorhergehenden Ansprüche, wobei
- die Vorrichtung ein Validierungsmodul umfasst,
- das Validierungsmodul dazu eingerichtet ist, ein Zulässigkeitsprüfergebnis über eine Zulässigkeit der entsprechenden unvalidierten Transaktionen zu ermitteln,
- abhängig vom Zulässigkeitsprüfergebnis der entsprechenden unvalidierten Transaktionen, die unvalidierte Transaktionen als die validierten Transaktionen im Datenblock gespeichert werden.

13. Computerimplementiertes Verfahren zum Bilden von Datenblöcken für eine Netzwerkapplikation mit folgenden Verfahrensschritten:
- Empfangen unvalidierter Transaktionen von einem oder mehreren Sendern, wobei die unvalidierten Transaktionen Daten umfassen;
- Ermitteln eines Datenblockbildungsprüfergebnisses anhand der Daten für die unvalidierten Transaktionen;
- Ermitteln eines Zulässigkeitsprüfergebnisses über eine Zulässigkeit der entsprechenden unvalidierten Transaktionen;
- Bilden oder speichern eines Datenblocks abhängig vom Datenblockbildungsprüfergebnis, wobei der Datenblock für eine Netzwerkapplikation gebildet wird und/oder in einer Netzwerkapplikation gespeichert wird;
- Speichern der unvalidierte Transaktionen als validierte Transaktion im Datenblock abhängig vom Zulässigkeitsprüfergebnis der entsprechenden unvalidierten Transaktionen.

14. Computerprogrammprodukt mit Programmbefehlen zur Durchführung des Verfahrens nach Anspruch 13.

15. Bereitstellungsvorrichtung für das Computerprogrammprodukt nach Anspruch 14, wobei die Bereitstellungsvorrichtung das Computerprogrammprodukt speichert und/oder bereitstellt.
